# EUROPEAN PATENT APPLICATION

(11) **EP 4 834 081 A1**
(43) Date of publication of application: **04.11.2026**
(21) Application number: 26171938.9
(22) Date of filing: 13.04.2026
(51) Int. Cl.: A01D 34/00, G05D 1/248, G05D 1/648

(54) **A METHOD IN A SELF-PROPELLED ROBOTIC LAWNMOWER AND A SELFPROPELLED ROBOTIC LAWNMOWER**

(30) Priority: 29.04.2025 SE 2550406
(71) Applicant: Husqvarna AB, 561 82 Huskvarna (SE)
(72) Inventor: Ärlig, Ulf, 561 82 Huskvarna (SE); Axell, Philip, 561 82 Huskvarna (SE); Liljedahl, Dan, 561 82 Huskvarna (SE); Alexiusson, Mikael, 561 82 Huskvarna (SE); Fröling, Douglas, 561 82 Huskvarna (SE); Liljedahl, Marcus, 561 82 Huskvarna (SE)

(57) **Abstract**

The present disclosure relates to a method for operating a self-propelled robotic lawnmower 1. The lawnmower 1 operates in a work area 31, and comprises driving means, processing means, and position detection means. In a first phase, the lawnmower 1 processes the work area in a pseudo-random pattern 34, while recording data corresponding to processed positions in the work area, until a predetermined condition is met. Then, in a second phase, the lawnmower 1 visits and processes unprocessed positions in the work area using the position detection means.

## Description

### Field of the invention

The present disclosure relates to a method in a self-propelled robotic lawnmower, being configured to operate in a work area, and comprising driving means, processing means, and position detection means.

The disclosure also concerns a corresponding self-propelled robotic lawnmower.

### Technical background

Such robotic lawnmowers are widely used to cut lawns. One general problem associated with such robotic lawnmowers is how to achieve an aesthetically attractive cutting result, while cutting the lawn in an efficient manner. Legacy-type robotic lawnmowers cut lawns in a pseudo-random pattern where the robotic lawnmower, upon reaching an outer boundary of the work area, changed its heading in a more or less arbitrary or pseudo-random manner. This resulted in an irregular cutting pattern where to a great extent areas which had been cut recently were processed again, which may be referred to as cutting the lawn with a high run-over factor.

More recent robotic lawnmowers are provided with sophisticated navigation means that allows the lawn to be cut in a systematic manner, for instance cutting in parallel lines with a small overlap between consecutive lines resulting in a much lower run-over factor. However, some users prefer the visual appearance of a lawn cut in the pseudo-random manner, since the more modern way of cutting lawns may give the lawn a 'stripy' appearance.

### Summary of the invention

One object of the present disclosure is therefore to provide a more efficient robotic lawnmower capable of accomplishing an aesthetically pleasing cutting result.

This object is achieved by means of a method as defined in claim 1. More specifically, in a method of the initially mentioned kind, the robotic lawnmower in a first phase processes the work area in a pseudo-random pattern, while recording data corresponding to processed positions in the work area, until a predetermined condition is met. In a second phase, the robotic lawnmower visits and processes unprocessed positions in the work area using the recorded data and the position detection means. The self-propelled robotic lawnmower generates, based on the configuration of the work area, a pseudo-random cutting pattern in advance which is followed during the first phase. The predetermined condition is considered met when the cutting pattern has been followed by the self-propelled robotic lawnmower. The pseudo-random cutting pattern includes curved paths.

This method allows the robotic lawnmower to operate in a pseudo-random pattern while the lawn is largely uncut and the run-over factor is low, meaning that recently already processed positions in the lawn are processed again only to a low extent. As soon as the run-over factor increases, the robotic lawnmower may begin to operate in a systematic fashion, actively visiting and processing uncut sections of the lawn. This provides a lawn cutting result with a non-systematic, aesthetically pleasing appearance, but with a much higher efficiency than associated with legacy type lawnmowers. Also, this provides a more optimized pseudo-random pattern, which has a lower run-over factor compared to a more truly random pattern. Thanks to the curved paths in the pseudo-random pattern, the operation during the first phase may reduce the number of unprocessed lawn islands remaining in the second phase.

The generated cutting pattern may typically be configured to have a run-over factor in the range from 1,25-2.

After the initial generation step, an unprocessed area configuration map may be estimated based on the pseudo-random cutting pattern, and the pseudo-random cutting pattern may be updated at least once based on the unprocessed area configuration map.

The work area may be divided into a number of sub-fields, and each sub-field may be processed sequentially in the first and the second phase before proceeding to the next sub-field. This may improve efficiency in may work area layouts.

The present disclosure also considers a self-propelled robotic lawnmower generally configured to carry out the above-outlined method.

### Brief description of the drawings

Fig 1 shows a self-propelled robotic lawnmower.
Fig 2 illustrates components of a robotic lawnmower.
Fig 3 illustrates a self-propelled robotic lawnmower processing a work area.
Fig 4 illustrates a pseudo-random path of a self-propelled robotic lawnmower moving over the work area.
Fig 5 shows a corresponding cutting pattern.
Fig 6 illustrates schematically in a flow chart a method according to the present disclosure.
Fig 7 illustrates processing remaining patches of uncut lawn in a second phase.
Fig 8 illustrates dividing a work area into sub-portions that are processed sequentially.

### Detailed description

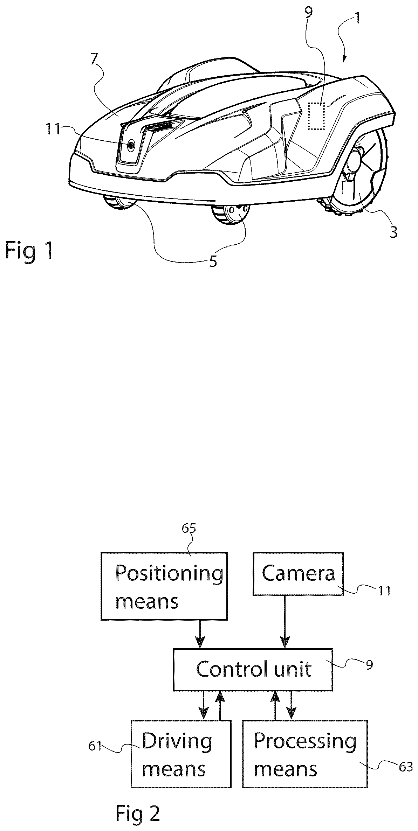

Self-propelled robotic lawnmowers 1, as shown with an example in fig 1, have become widely used. Such lawnmowers 1 often include rear driving wheels 3 and front swivelling wheels 5 although other configurations are available. Enclosed under a cover 7 are one or more driving motors and a cutting implement, neither of which are visible in fig 1, and the driving and cutting is controlled by a control unit 9. The robotic lawnmower is provided with a camera 11 that can be used to avoid obstacles such as gardening tools, toy or even pets that can be left on the lawn. This camera 11 may be used also for other purposes in this disclosure as will be discussed.

Fig 2 generally outlines system components in the robotic lawnmower 1. In addition to the camera 11, feeding image data to the control unit 9, the robotic lawnmower 1 comprises navigation or positioning means 65, primarily tasked with keeping the robotic lawnmower within a work area, but also capable of navigating within that work area. The robotic lawnmower 1 further includes driving means 61 that may be considered to include said driving wheels 3 in addition to one or more electric motors and associated motor control electronics, The driving means 61 are controlled by the control unit 9 and generally serves to move the robotic lawnmower 1 in a desired direction at a desired speed. The robotic lawnmower also comprises processing means 63, which typically comprise a knife implement with associated electric motors with control electronics.

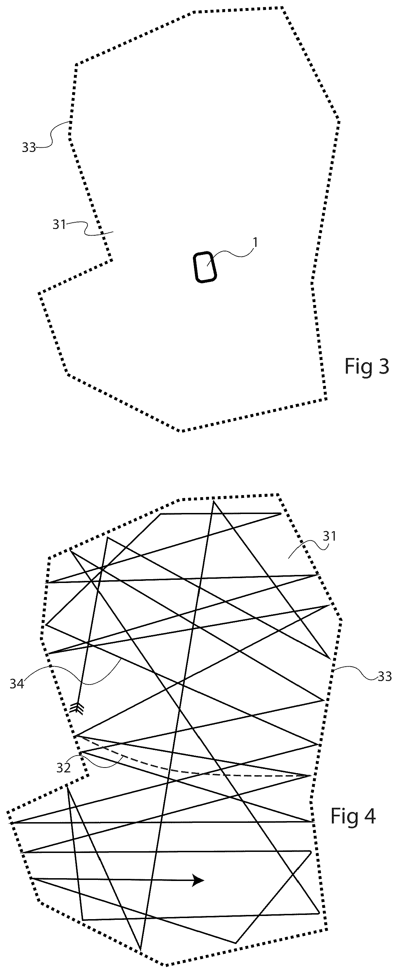

Typically, as illustrated in fig 3, the robotic lawnmower 1 is configured to operate within a work area 31. This can in principle be accomplished by providing a legacy-type boundary cable at the boundary 33 of the work area 31. The robotic lawnmower 1 may then be configured to sense a signal applied on the boundary cable in the proximity thereof and alter its heading, such that it remains within the work area 31.

It is also possible to provide the robotic lawnmower navigation means 65 with enhanced satellite navigation technology or similar to make it capable of remaining within the work area 31 without a boundary cable.

Robotic lawnmowers 1 may operate in a pseudo-random pattern. By a pseudo-random pattern is meant a pattern that is at least meant to appear random in contrast to for instance mowing in parallel lines or concentric circles, for instance.

In legacy-type robotic lawnmowers pseudo-random patterns were a result of using a simple navigating method. Fig 4 illustrates such a pseudo-random path 34 of a self-propelled robotic lawnmower 1 moving over the work area 31. Then, the robotic lawnmower 1 moves in straight line until it reaches the boundary or another type of obstacle (not shown). At this point, the robotic lawnmower 1 changes its heading in what appears to be a random fashion but in such a way that the subsequent forward motion will be directed away from the boundary 33 or the obstacle but typically not at a 180° direction change with regard to the preceding heading. The pseudo-random change of direction may be accomplished by choosing consecutive angles in a list of angles for changing directions. This will appear random to a casual observer. It would also be possible to generate a direction change using a random number algorithm, but this is not necessary.

Although used consistently in fig 4, it is not necessary that the robotic lawnmower moves in a straight line between the boundaries; it may also move in a curved or zigzag pattern, for instance. In some instances, this may be an advantage as will be discussed. In the present disclosure, at least one straight segment of the pseudo random pattern is thus replaced with a curved segment 32.

When cutting as illustrated in fig 4, the run-over factor may be high, meaning that it is likely that the robotic lawnmower 1 at any given moment processes a portion of the work area 31 that has already been processed in a given preceding time period, i.e. during the last day. This probability is initially zero and gradually increases as the cutting proceeds. This means that the overall efficiency of the robotic lawnmower 1 will be relatively low.

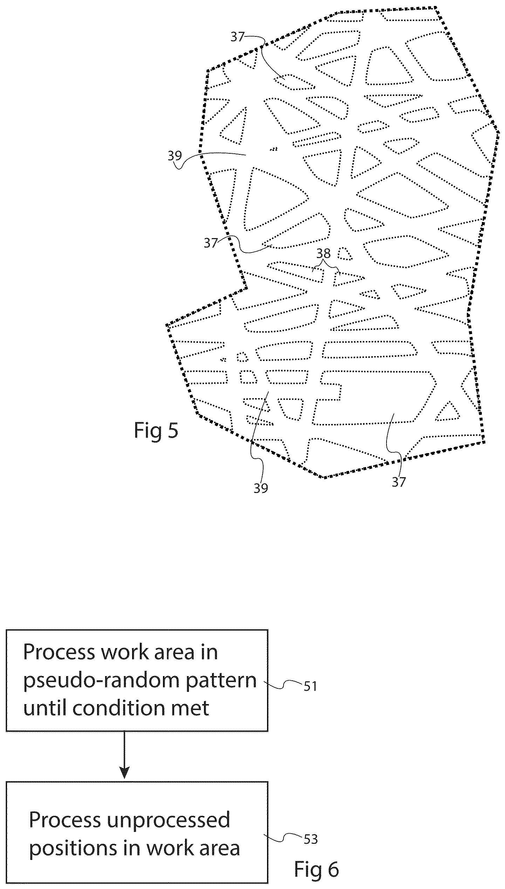

Fig 5 illustrates the cutting pattern after processing a work area 31 along the pseudo-random cutting path 34 of fig 4. As illustrated in fig 5 there remains some uncut areas 37. Additionally, at some locations 39, the cutting path 34 has crossed itself and therefore, the lawn at those locations 39 have been cut at least twice, implying a run-over factor which increases over time, despite the remaining uncut areas 37.

With a robotic lawnmower with improved navigation means 65, such as based on RTK (real-time kinematics) or similar enhanced GPS navigation technologies, a different approach for processing a lawn becomes possible. The robotic lawnmower 1 is then capable of operating with a precision of a few centimetres. The boundary cable may be dispensed with, since the navigation precision is high enough to safely remain within the work area. The boundary cable may still be kept for regulatory reasons.

Further, the robotic lawnmower 1 becomes capable of cutting in a systematic manner, which may reduce the run-over factor significantly. For instance, the robotic lawnmower 1 may cut the lawn in straight, parallel lines where the overlap between successive lines is minimal. This means that for a given robotic lawnmower cutting capacity, a bigger area can be handled.

However, many users prefer the visual appearance of a lawn cut in a pseudo-random manner. Specifically, a systematically cut lawn may have a stripy appearance with lines of cut grass that are not immediately absorbed by a lawn.

The present disclosure provides a method for processing a lawn in such a way that the appearance of a pseudo-random cutting pattern is maintained with an improved efficiency. This method is outlined in the flow chart of fig 6.

Generally, this method includes the step 51 of processing the work area in a pseudo-random pattern in a first phase, while recording data corresponding to processed positions in the work area, until a predetermined condition is met.

In a second step 53, carried out during a second phase, the robotic lawnmower visits and processes the unprocessed positions 37 in the work area using the position detection means.

The initial step 51 of processing the work area in a pseudo-random pattern may be carried out in different ways.

It would be possible to process the lawn in a pattern as if the robotic lawnmower were of a legacy-type that simply travels in a straight line from one point at the outer boundary to another, and upon reaching the boundary or another obstacle changes its heading substantially so as to travel towards a subsequent point on the outer boundary. The change of heading can be based on a random algorithm, or simply be an angular value picked from a list of values that are used in an order. Typically, a 180° change may be avoided so as not to cut the just processed path again. The robotic lawnmower may carry out the corresponding change of heading when reaching another obstacle that is not the outer boundary, as is well known per se.

In its simplest form, this could be carried out for a predetermined time period that is determined based on the surface area of the work area as a whole after which the predetermined condition is considered to be met. Alternatively, the predetermined condition could be considered met when a predetermined processing distance has been covered, which depends on the area to be processed. This distance corresponds to processed area when multiplied with the processing width of the robotic lawnmower.

Other ways of determining that the predetermined condition is achieved could in principle include optically or mechanically determining that a specific run-over factor is achieved. Optically, it is possible to detect using the camera 11 that an already processed area is arrived at. Similarly the processing means may detect that the area presently being processed is already cut, since the load on the knives becomes lower.

In the present disclosure it is preferred to determine, wholly or partly, a pseudo-random cutting pattern from the outset. As the robotic lawnmower 1 is provided with data corresponding to the work area layout and any obstacles therein, an algorithm may be provided that based on the layout of the work area 31 and a starting point therein provides a cutting path, i.e. a number of changes of heading at specific locations that establishes the cutting path. This may be optimized such that a minimum run-over factor is achieved for a maximum processed area.

After this initial generation of the pseudo-random cutting pattern 34, an unprocessed area configuration map (fig 5) may be estimated based on the pseudo-random cutting pattern 34. It is possible to update the pseudo-random cutting pattern 34 based on this unprocessed area configuration map such that the number and/or size of the unprocessed areas 37 are reduced for a given first phase processing time. This may be carried out once or may be re-iterated a few times at low computer processing cost using a basic algorithm.

Typically the pseudo-random cutting pattern may be configured to have a run-over factor in the range from 1,25-2.

As mentioned and illustrated in fig 4, the pre-determined pseudo-random cutting pattern comprises one or more curved segments, here illustrated as a dashed line 32 to replace a straight line between the corresponding points. This may eliminate some uncut areas 38 (cf. fig 5) already in the first phase, without adding significant first-phase processing time.

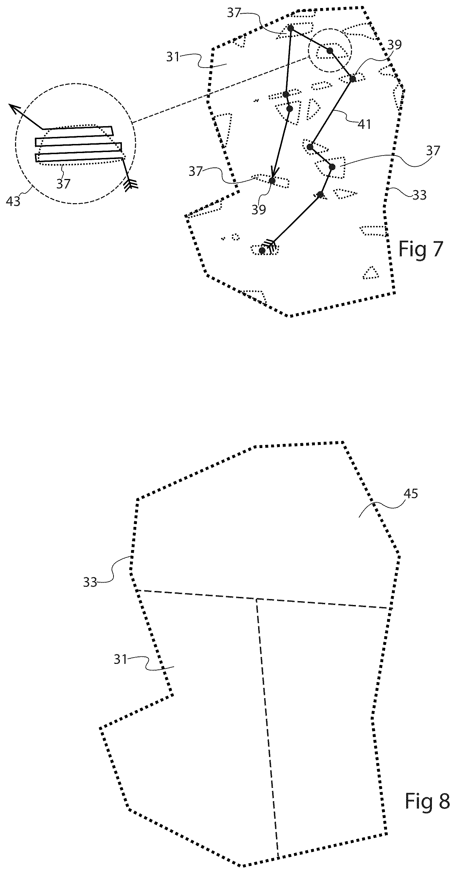

In the second step 53, the robotic lawnmower 1 visits and processes the unprocessed positions 39 in the work area 31 using the position detection means. Whether the robotic lawnmower 1 records the actual positions visited in the first phase or data that can be used to determine those positions at the outset of the second step, the uncut positions in the work area 31 may be readily identified by simply removing already visited and processed parts of the work area 31. An example of the resulting map is illustrated in fig 7, where the pseudo-random cutting of fig 4 has proceeded longer than in fig 5, such that a smaller number of smaller uncut areas 37 remain like isles in the work area 31.

The robotic lawnmower 1 as mentioned is aware of positions 39 corresponding to the uncut areas 37 and may now systematically visit and process those areas.

Typically, the robotic lawnmower 1 may determine a trajectory 41 that may be followed to visit all remaining uncut areas 37 in an efficient manner. When arriving at such an area, it may be processed in different ways. As the robotic lawnmower 1 may be aware not only about the position 39 of the uncut area 37 but also its shape and size, it is possible to cut the area 37 in a systematic manner, for instance in successive lines as indicated in the enlarged portion 43 of fig 7. The robotic lawnmower 1 then proceeds to the next uncut area.

It would also be possible to locally process the uncut area 37 in a pseudo-random fashion.

Fig 8 illustrates dividing a work area 31 into sub-portions 45 that are processed sequentially. Then both of the first and second steps 51, 53 are carried out for those sub-portions in order. This may increase the processing efficiency, especially in work areas with complex layouts.

The present disclosure is not restricted to the above-described examples and may be varied and altered in different ways within the scope of the appended claims.

## Claims

1. A method for operating a self-propelled robotic lawnmower (1), the lawnmower being configured to operate in a work area (31), and comprising driving means (61), processing means (63), and position detection means (65), the method **characterized by:**
in a first phase, initially generating, based on the configuration of the work area (31), a pseudo-random cutting pattern (34), and processing the work area in the pseudo-random pattern (51), until a predetermined condition is met when the pseudo-random cutting pattern has been completed by the self-propelled robotic lawnmower (1), wherein the pseudo-random cutting pattern (34) includes curved paths, and
in a second phase, visiting and processing (53) unprocessed areas (37) in the work area using the position detection (65) means.

2. Method according to claim 1, wherein the pseudo-random cutting pattern (34) is configured to have a run-over factor in the range from 1,25-2.

3. Method according to claim 1 or 2, wherein after the initial generation, of the pseudo-random cutting pattern (34), an unprocessed area configuration map is estimated based on the pseudo-random cutting pattern (34), and the pseudo-random cutting pattern (34) is updated at least once based on the unprocessed area configuration map.

4. Method according to any of the preceding claims, wherein the work area is divided into a number of sub-fields, and each sub-field is processed sequentially in the first and the second phase.

5. A self-propelled robotic lawnmower (1) comprising driving means (61), processing means (63), and position detection means (65), and being configured to operate in a work area (31), **characterized by:** being configured to
in a first phase initially generating, based on the configuration of the work area (31), a pseudo-random cutting pattern (34),
processing the work area in a pseudo-random pattern (34), while recording information corresponding to processed positions in the work area, until a predetermined condition is met when the pseudo-random cutting pattern has been completed, the pseudo-random cutting pattern (34) including curved paths, and
in a second phase, to visit and process unprocessed positions (37) in the work area using the position detection means.

6. Self-propelled robotic lawnmower according to claim 5, wherein the pseudo-random cutting pattern (34) is configured to have a run-over factor in the range from 1,25-2.

7. Self-propelled robotic lawnmower according to claim 5 or 6, wherein after the initial generation, of the pseudo-random cutting pattern (34), the lawnmower is configured to estimate an unprocessed area configuration map based on the pseudo-random cutting pattern (34), and to update the pseudo-random cutting pattern (34) at least once based on the unprocessed area configuration map.

8. Self-propelled robotic lawnmower according to any of claims 5-7, wherein the lawnmower is configured to process work area, divided into a number of sub-fields, each sub-field being processed sequentially in the first and the second phase.
